# EUROPÄISCHE PATENTSCHRIFT

(11) **EP 1 413 836 B1**
(45) Veröffentlichungstag und Bekanntmachung des Hinweises auf die Patenterteilung: **02.12.2009**
(21) Anmeldenummer: 03021959.6
(22) Anmeldetag: 30.09.2003
(51) Int. Cl.: F24J 2/24, F24J 2/42, F24J 2/46, F16L 15/00

(54) **Solarkollektor**
Solar collector
Capteur solaire

(30) Priorität: 01.10.2002 DE 20215126 U
(43) Veröffentlichungstag der Anmeldung: 28.04.2004
(73) Patentinhaber: Roos, Franz, D-63674 Altenstadt (DE)
(72) Erfinder: Roos, Franz, D-63674 Altenstadt (DE)
(74) Vertreter: Hebing, Norbert

(56) Entgegenhaltungen:
- EP-A1- 0 374 367
- DE-A1- 2 814 004
- DE-A1- 3 812 250
- DE-U1- 29 920 969
- FR-A1- 2 396 938
- FR-A1- 2 507 230
- GB-A- 2 099 984

## Beschreibung

Die Erfindung betrifft einen Solarkollektor zum Erwärmen von Schwimmbadwasser, mit den Merkmalen der Präambel des Anspruchs 1,

Solarkollektoren der vorstehenden Art sind in der DE 88 15 930.2 Ul beschrieben. Die die Verteilerrohre verbindenden Rippenrohre haben aufgrund der Rippen eine große Außenoberfläche und vermögen deshalb bei Sonneneinstrahlung viel Wärme aufzunehmen. Dadurch kommt es zu einer erheblichen Längenzunahme der die Verteilerrohre verbindenden Kollektorrohre und damit des gesamten Solarkollektors. Das bereitet Schwierigkeiten bei der Anordnung und Befestigung der Zuleitung zu dem einen Verteilerrohr und Ableitung vom anderen Verteilerrohr. Da diese einen wesentlich größeren Querschnitt haben als die die Verteilerrohre verbindenden Rippenrohre und deshalb in Relation zu dem in ihnen fließenden Wasser eine wesentlich geringere Oberfläche haben, erwärmen sie sich wesentlich weniger als die Rippenrohre. Es kommt deshalb zu erheblich unterschiedlichen Dehnungen zwischen dem Solarkollektor einerseits und der Zuleitung und Ableitung andererseits. Deshalb konnte man bislang die Zuleitung und/oder Ableitung nicht am Solarkollektor befestigen, sondern musste sie längenverschieblich auf der Dachfläche fixieren, auf der der Solarkollektor gehalten ist. Diese vom Solarkollektor getrennte Befestigung der Zuleitung und Ableitung ist arbeitsaufwändig und deshalb unerwünscht.

In der GB 2 099 984 ist ein Solarkollektor beschrieben, bei dem die Zu- und Ableitungen aus flexiblen Verbindungsrohren 8 bestehen, so dass sie sich bei einer Abkühlung des Solarkollektors mäanderförmig biegen können und bei einem erwärmten Solarkollektor ihre Ursprungsform einnehmen.

In der DE 38 12 250 A wird ein Solarkollektor nach der Preambel des Anspruchs 1 beschrieben.

Der Erfindung liegt das Problem zugrunde, einen Solarkollektor der eingangs genannten Art zu entwickeln, dessen Zuleitung und/oder Ableitung besonders einfach und rasch zu verlegen ist. Weiterhin soll ein Rohrverbinder für einen solchen Solarkollektor und ein Leitungshalter geschaffen werden.

Das Problem wird erfindungsgemäß dadurch gelöst, dass zum Befestigen der Zuleitung und/oder Ableitung am Solarkollektor Leitungshalter dienen.

Durch solche in Längsrichtung elastisch verformbare Rippenrohre als Zuleitung und/oder Ableitung können diese in Längsrichtung unabhängig vom Solarkollektor unverschieblich an diesem befestigt werden, weil Längenänderungen des Solarkollektors durch elastische, axiale Verformungen der Zuleitung und Ableitung ausgeglichen werden können. Dadurch entfällt die Notwendigkeit der Befestigung der Zuleitung und Ableitung an der Dachfläche, so dass sich die Montage des Solarkollektors wesentlich vereinfacht und eine Deformation des Solarkollektors aufgrund von Wärmedehnungen vermieden wird. Auch bei großen Temperaturschwankungen bewegt sich die Zu- und Ableitung synchron mit dem gesamten Solarkollektor.

Eine vorteilhafte Weiterbildung der Erfindung besteht darin, dass die Leitungshalter eine über die Zuleitung und/oder Ableitung schnappende Leitungsaufnahme und eine Vielzahl von hintereinander im Abstand der Rippenrohre des Solarkollektors angeordneten Aufnahmen zum Übergreifen der Rippenrohre aufweisen. Solche Leitungshalter kann man derart über die einzelnen Rippenrohre des Solarkollektors klipsen, dass ihre jeweilige Leitungsaufnahme über die Länge des Solarkollektors zunehmend Abstand von dem Solarkollektor erhält und damit die Zuleitung oder Ableitung über ihre gesamte Länge Gefälle bekommt, damit es möglich wird, zum Winter das Wasser aus dem Solarkollektor vollständig abzulassen.

Zum Verbinden der Zuleitung und/oder Ableitung eines Solarkollektors stehen dem Fachmann derzeit Rohrverbinder zur Verfügung, welche ein mit Außengewinde versehenes Übergangsteil aufweisen, in das von einer Seite her ein Rohrteil einschiebbar ist und welche eine auf das Außengewinde aufschraubbare Überwurfmutter haben, die an ihrem dem Übergangsteil abgewandten Ende eine radial nach innen gerichtete Schulter hat, welche gegen einen sich an dem eingeschobenen Rohrteil festklemmenden Spannring anliegt. Solche Rohrverbinder eignen sich jedoch nur für glatte Rohre. Der Spannring ist dabei als ein konisches Bauteil ausgebildet, welches sich beim Zusammenschrauben des Rohrverbinders auf die Mantelfläche eines Rohrendes presst und dieses dadurch im Rohrverbinder hält. Bei Rippenrohren sind solche Rohrverbinder nicht anwendbar.

Als Rohrverbinder hat man bisher auch elastische Hülsen eingesetzt, in die die miteinander zu verbindenden Rohrenden eingeschoben und durch Spannringe festgehalten wurden. Die Montage solcher Rohrverbinder ist aufwändig und zeitraubend. Oftmals engen die bekannten Rohrverbinder auch den freien Querschnitt der Leitungen ein.

Die Schaffung eines Rohrverbinders für den erfindungsgemäßen Solarkollektor wird gemäß der Erfindung dadurch gelöst, dass der Rohrverbinder zum Verbinden mit einem als Rippenrohr ausgebildeten Rohrteil gestaltet ist, indem der Spannring aus zumindest zwei Spannringabschnitten besteht, die jeweils mit einem radial nach innen gerichteten Bund in eine umlaufende Nut des Rippenrohres einsetzbar sind, dass die beiden Spannringabschnitte einen radial nach außen gerichteten Anschlagbund aufweisen, gegen den die Schulter der Überwurfmutter sich anzulegen vermag und dass in zumindest eine Nut des Rippenrohres innerhalb des Übergangsteils eine umlaufende Dichtung eingesetzt ist.

Bei einem solchen Rohrverbinder können mittels der Überwurfmutter relativ hohe axiale Spannkräfte erzeugt werden, da die beiden Spannringabschnitte formschlüssig in eine umlaufende Nut des Rippenrohres einsetzbar sind. Die relativ hohen axialen Spannkräfte drücken die Nut mit der Dichtung und damit auch die Dichtung zusammen, so dass die Dichtung gegen die Innenmantelfläche des Übergangsteils gepresst wird und dadurch zuverlässig dichtet, ohne dass sie zuvor das Einschieben des Rippenrohres in das Übergangsteil unerwünscht stark behindert. Da die Rohrverbindung durch das Aufschrauben der Überwurfmutter auf das Übergangsteil erfolgt, ist die Rohrverbindung ohne Werkzeug auf sehr einfache Weise zu erstellen.

Eine vorteilhafte Weiterbildung der Erfindung besteht darin, dass jeder Spannringabschnitt einen auf die Außenmantelfläche des Rippenrohres aufsetzbaren Zylinderbereich aufweist, über den die Überwurfmutter zu greifen vermag und dass der radial nach außen gerichtete Anschlagbund nahe eines axialen Randes des Spannringabschnittes vorgesehen ist. Diese Gestaltung der Spannringabschnitte ermöglicht es, zum Lösen des Rohrverbinders und damit zum Herausbewegen des Endes des Rippenrohres aus dem Übergangsteil nach dem Abschrauben der Überwurfmutter die Spannringabschnitte aus der Nut herauszunehmen, dann die Überwurfmutter wieder aufzuschrauben und anschließend die Spannringabschnitte unmittelbar hinter der Überwurfmutter in das Rippenrohr einzusetzen. Danach kann man durch Zurückschrauben der Überwurfmutter diese gegen die Spannringabschnitte bewegen und dadurch das Ende des Rippenrohres aus dem Übergangsteil herausbewegen.

Die von der Überwurfmutter auf das Rippenrohr auszuübenden axialen Kräfte können besonders hoch sein, wenn gemäß einer vorteilhaften Weiterbildung der Erfindung insgesamt zwei Spannringabschnitte vorgesehen sind, welche zusammen das Rippenrohr um 360° zu umschließen vermögen.

Die beiden Spannringabschnitte werden als eine Einheit zusammengehalten und können als Einheit über das jeweilige Rippenrohrende geschoben werden, wenn gemäß einer anderen Weiterbildung der Erfindung die beiden Spannringabschnitte an einer Seite durch ein Filmscharnier miteinander verbunden sind.

Die Spannringabschnitte werden durch die Überwurfmutter auch dann daran gehindert, aus der jeweiligen Nut des Rippenrohres zu gelangen, wenn die Überwurfmutter an ihrer Stirnseite mit ihrem nach innen gerichteten Bund einen außenseitig zumindest teilweise über den Anschlagbund greifenden Zentrierabsatz aufweist.

Die Erfindung lässt zahlreiche Ausführungsformen zu. Zur weiteren Verdeutlichung ihres Grundprinzips ist eine davon in der Zeichnung dargestellt und wird nachfolgend beschrieben. In ihr zeigen die
- Fig.1: eine perspektivische Ansicht eines auf einem Garagendach montierten Solarkollektors nach der Erfindung,
- Fig.2: einen Längsschnitt durch einen erfindungsgemäßen Rohrverbinder im Verbindungszustand,
- Fig.3: eine Ansicht eines Spannrings des Rohrverbinders,
- Fig.4: einen Längsschnitt durch den Spannring,
- Fig.5: einen Längsschnitt durch den Rohrverbinder beim Lösen eines Rohrendes,
- Fig.6: eine Ansicht eines Leitungshalters.

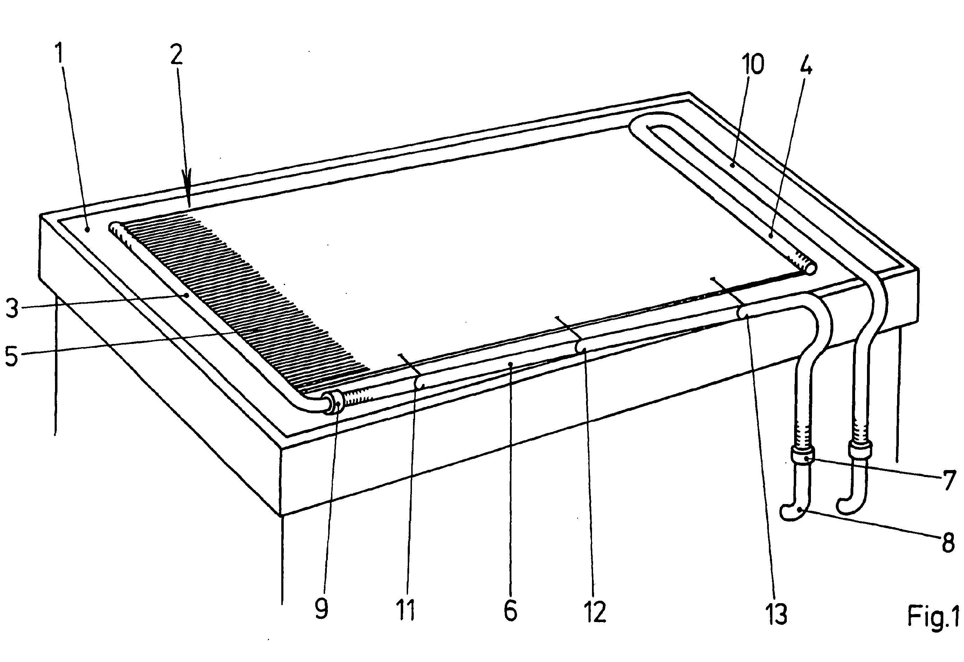

Die Figur 1 zeigt eine pultdachartig geneigte Dachfläche 1 einer Garage. Auf dieser Dachfläche 1 ist ein Solarkollektor 2 befestigt. Dieser hat zwei Verteilerrohre 3, 4, welche durch eine Vielzahl von schematisch angedeuteten, parallel laufenden Rippenrohren 5 miteinander verbunden sind.

Wichtig für die Erfindung ist eine Zuleitung 6, die ebenfalls als Rippenrohr ausgebildet ist und vom linken Verteilerrohr 3 an der unteren Seite des Solarkollektors 2 mit zunehmendem Abstand nach rechts verläuft, damit die Zuleitung 6 über ihre gesamte Länge Gefälle hat. Nahe des rechten Endes des Solarkollektors 2 ist die Zuleitung 6 nach unten hin umgelenkt und über einen Rohrverbinder 7 mit einer Leitung 8 verbunden. Durch einen entsprechenden Rohrverbinder 9 ist die Zuleitung an dem Verteilerrohr 3 angeschlossen.

Die Zuleitung 6 ist durch Leitungshalter 11, 12, 13 am Solarkollektor 2 befestigt. Diese werden, was später noch genauer beschrieben wird, derart auf die einzelnen Rippenrohre 5 des Solarkollektors 2 geklipst, dass nach rechts hin jeweils der nächstfolgende Leitungshalter 12, 13 weiter vom Solarkollektor 2 weg ragt als der vorangehende.

Die Figur 1 zeigt weiterhin eine Ableitung 10, die ebenfalls als Rippenrohr ausgeführt ist und von dem oberen Ende des rechten Verteilerrohres 4 nach unten führt. Je nach den Gegebenheiten des Einbaus könnte natürlich auch die Ableitung 10 anstelle der Zuleitung 6 entlang der unteren Seite des Solarkollektors 2 verlaufen. Möglich wäre es auch, die Zuleitung 6 und die Ableitung 10 beispielsweise bis etwa zur Mitte des Solarkollektors 2 entlang seiner unteren Seite und dann nach unten zu führen.

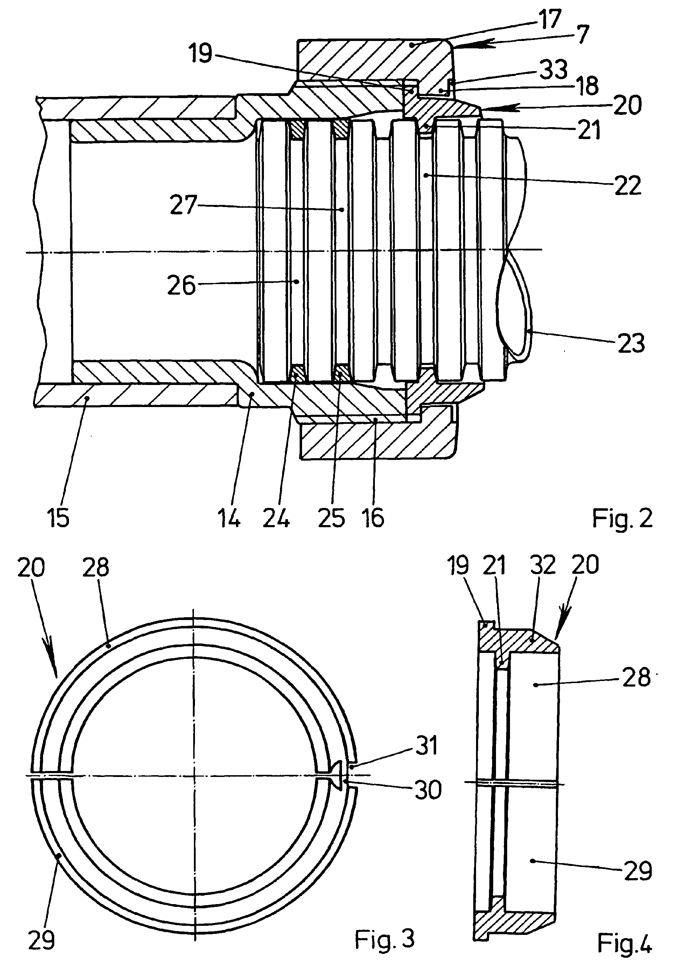

Die Figur 2 zeigt den Rohrverbinder 7 im Längsschnitt und gegenüber Figur 1 stark vergrößert. Dieser hat ein Übergangsteil 14, auf welches in der Zeichnung gesehen von links her eine Leitung 15 aufgeschoben ist. Das Übergangsteil 14 hat ein Außengewinde 16, auf welches eine Überwurfmutter 17 geschraubt ist. Diese Überwurfmutter 17 drückt mit einer nach innen gerichteten Schulter 18 axial gegen einen nach außen gerichteten Anschlagbund 19 eines Spannringes 20. Dieser Spannring 20 hat einen radial nach innen gerichteten Bund 21, der in eine umlaufende Nut 22 eines Rippenrohres 23 eingreift. Hierdurch wird das Rippenrohr 23 durch die Überwurfmutter 17 in das Übergangsteil 14 geschoben, wenn man die Überwurfmutter 17 festzieht.

Zur Abdichtung des Rippenrohres 23 im Übergangsteil 14 dienen zwei umlaufende Dichtungen 24, 25, die jeweils in eine Nut 26, 27 des Rippenrohres 23 eingesetzt sind.

Die Figuren 3 und 4 verdeutlichen die Gestaltung des Spannringes 20. Dieser besteht aus jeweils zwei Spannringabschnitten 28, 29, die zusammen einen vollständigen Ring ergeben. Durch diese Teilung des Spannringes 20 kann man seine beiden Spannringabschnitte 28, 29 in die Nut 22 des Rippenrohres 23 einsetzen, wie das in Figur 1 gezeigt ist.

Die Figur 3 lässt zusätzlich erkennen, dass die beiden Spannringabschnitte 28, 29 an ihrer rechten Seite durch ein Filmscharnier 30 miteinander verbunden sind. Radial außenseitig zum Filmscharnier 30 ist eine Erweiterung 31 vorgesehen. Das Filmscharnier 30 ermöglicht es in Verbindung mit der Erweiterung 31 den Spannring 20 an seiner linken Seite maulartig aufzuklappen und dann als Ganzes über das Rippenrohr 23 zu schieben. Die beiden Spannringabschnitte 28, 29 haben jeweils einen Zylinderbereich 32, über den die Schulter 18 der Überwurfmutter 17 zu schieben ist, bis er gegen den Anschlagbund 19 gelangt, welcher jeweils an einer Stirnseite des Spannringabschnittes 28, 29 vorgesehen ist. Der Anschlagbund 19 hat einen solchen Außendurchmesser, dass ein in Figur 1 gezeigter Zentrierabsatz 33 an der Außenseite der Überwurfmutter 17 über den Anschlagbund 19 zu greifen vermag, wenn sich der Anschlagbund 19 statt wie in Figur 2 gezeigt innerhalb der Überwurfmutter 17 außerhalb von ihr befindet.

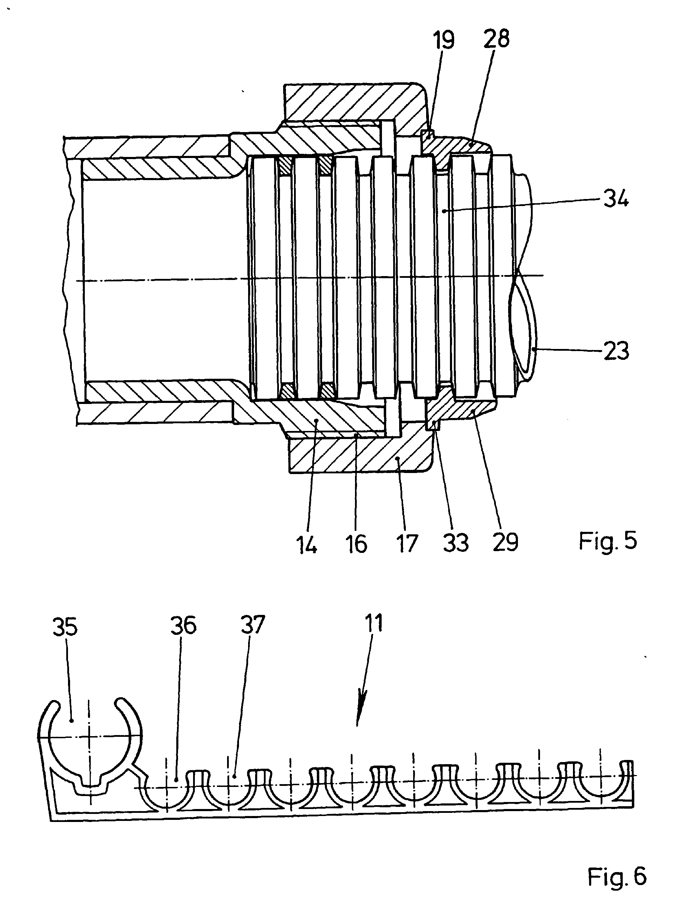

Die Figur 5 zeigt, wie auf bequeme Weise das Rippenrohr 23 aus dem Übergangsteil 14 herausbewegt werden kann. Hierzu schraubt man zunächst die Überwurfmutter 17 von dem Übergangsteil 14 ab und demontiert die Spannringabschnitte 28, 29. Dann schraubt man die Überwurfmutter 17 wieder auf das Übergangsteil 14 und setzt die beiden Spannringabschnitte 28, 29 unmittelbar hinter der Überwurfmutter 17 in eine Nut 34 des Rippenrohres 23 ein. Schraubt man nun die Überwurfmutter 17 vom Übergangsteil 14 ab, so vermag zunächst der Anschlagbund 19 innerhalb des Zentrierabsatzes 33 zu gelangen. Anschließend drückt die Überwurfmutter 17 gegen den Anschlagbund 19 und bewegt dadurch das Rippenrohr 23 aus dem Übergangsteil 14.

Die Figur 6 zeigt einen Leitungshalter 11, welcher identisch mit den anderen Leitungshaltern 12, 13 gestaltet ist. Er hat an seiner in Figur 3 gesehen linken Seite eine Leitungsaufnahme 35, in die die in Figur 1 gezeigte, als Rippenrohr ausgebildete Zuleitung 6 eingeklipst werden kann. Der Leitungshalter 11 hat weiterhin unmittelbar aufeinanderfolgend Aufnahmen, wie zum Beispiel 36, 37, welche auf die Rippenrohre 5 des Solarkollektors 2 aufzuklipsen sind. Diese Anordnung von Aufnahmen 36, 37 ermöglicht es, den Leitungshalter 11 auf einen Solarkollektor 2 so aufzuklipsen, dass sich die Leitungsaufnahme 35 unmittelbar vor dem Solarkollektor 2 befindet und die Aufnahme 36 über das erste Rippenrohr 5 und die sich anschließenden Aufnahmen 37 über das jeweils folgende Rippenrohr des Solarkollektors 2 greifen. Soll die Leitungsaufnahme 35 mehr Abstand vom Solarkollektor 2 erhalten, um für eine Zuleitung 6 oder Ableitung Gefälle zu erzeugen, dann klipst man den Leitungshalter 11 so auf die Rippenrohre 5 des Solarkollektors 2, dass beispielsweise die Aufnahme 36, beide Aufnahmen 36, 37 oder weitere Aufnahmen sich vor dem Solarkollektor 2 befinden.

### Bezugszeichenliste

- 1: Dachfläche
- 2: Solarkollektor
- 3: Verteilerrohr
- 4: Verteilerrohr
- 5: Rippenrohr
- 6: Zuleitung
- 7: Rohrverbinder
- 8: Leitung
- 9: Rohrverbinder
- 10: Ableitung
- 11: Leitungshalter
- 12: Leitungshalter
- 13: Leitungshalter
- 14: Übergangsteil
- 15: Leitung
- 16: Außengewinde
- 17: Überwurfmutter
- 18: Schulter
- 19: Anschlagbund
- 20: Spannring
- 21: Bund
- 22: Nut
- 23: Rippenrohr
- 24: Dichtung
- 25: Dichtung
- 26: Nut
- 27: Nut
- 28: Spannringabschnitt
- 29: Spannringabschnitt
- 30: Filmscharnier
- 31: Erweiterung
- 32: Zylinderbereich
- 33: Zentrierabsatz
- 34: Nut
- 35: Leitungsaufnahme
- 36: Aufnahme
- 37: Aufnahme

## Patentansprüche

1. Solarkollektor (2) zum Erwärmen von Schwimmbadwasser, welcher zwei Verteilerrohre (3, 4) hat, die durch eine Vielzahl von parallel laufenden Rippenrohren (5) miteinander verbunden sind und welcher beispielsweise auf einer Dachfläche (1) fixiert ist, und bei dem entlang einer Längsseite des Solarkollektors (2) eine Zuleitung (6) und/oder Ableitung (10) für das Wasser vorgesehen ist, wobei die Zuleitung (6) und/oder Ableitung (10) jeweils als in Längsrichtung elastisch verformbares Rippenrohr (23) ausgebildet und am Solarkollektor (2) befestigt ist, **dadurch gekennzeichnet, dass** zum Befestigen der Zuleitung (6) und/oder Ableitung am Solarkollektor Leitungshalter (11, 12, 13) dienen.

2. Solarkollektor (2) nach Anspruch 1, **dadurch gekennzeichnet, dass** die Leitungshalter (11, 12, 13) eine über die Zuleitung (6) und/oder Ableitung schnappende Leitungsaufnahme (35) und eine Vielzahl von hintereinander im Abstand der Rippenrohre (5) des Solarkollektors (2) angeordneten Aufnahmen (36, 37) zum Übergreifen der Rippenrohre (5) aufweisen.

3. Solarkollektor nach Anspruch 1 oder 2, **dadurch gekennzeichnet, dass** zum Verbinden der Zuleitung (6) und/oder Ableitung des Solarkollektors (2) ein Rohrverbinder (7, 9) vorgesehen ist, welcher ein mit Außengewinde (16) versehenes Übergangsteil (14) aufweist, in das von einer Seite her das Rippenrohr (23), das die Zuleitung (6) und/oder Ableitung (10) bildet, einschiebbar ist, und welcher eine auf das Außengewinde (16) aufschraubbare Überwurfmutter (17) hat, die an ihrem dem Übergangsteil (14) abgewandten Ende eine radial nach innen gerichtete Schulter (18) hat, welche gegen einen sich an dem eingeschobenen Rippenrohr festklemmenden Spannring (20) anliegt, wobei der Spannring (20) aus zumindest zwei Spannringabschnitten (28, 29) besteht, die jeweils mit einem radial nach innen gerichteten Bund (21) in eine umlaufende Nut (22) des Rippenrohres (23) einsetzbar sind, die beiden Spannringabschnitte (28, 29) einen radial nach außen gerichteten Anschlagbund (19) aufweisen, gegen den die Schulter (18) der Überwurfmutter (17) sich anzulegen vermag, und in zumindest eine Nut (26, 27) des Rippenrohres (23) innerhalb des Übergangsteils (14) eine umlaufende Dichtung (24, 25) eingesetzt ist.

4. Solarkollektor nach Anspruch 3, **dadurch gekennzeichnet, dass** jeder Spannringabschnitt (28, 29) einen auf die Außenmantelfläche des Rippenrohres (23) aufsetzbaren Zylinderbereich (32) aufweist, über den die Überwurfmutter (17) zu greifen vermag, und dass der radial nach außen gerichtete Anschlagbund (19) nahe eines axialen Randes des Spannringabschnittes (28, 29) vorgesehen ist.

5. Solarkollektor nach den Ansprüchen 3 oder 4, **dadurch gekennzeichnet, dass** insgesamt zwei Spannringabschnitte (28, 29) vorgesehen sind, welche zusammen das Rippenrohr (23) um 360° zu umschließen vermögen.

6. Solarkollektor nach Anspruch 5, **dadurch gekennzeichnet, dass** die beiden Spannringabschnitte (28, 29) an einer Seite durch ein Filmscharnier (30) miteinander verbunden sind.

7. Solarkollektor nach zumindest einem der vorangehenden Ansprüche, **dadurch gekennzeichnet, dass** die Überwurfmutter (17) an ihrer Stirnseite mit ihrer nach innen gerichteten Schulter (18) einen außenseitig zumindest teilweise über den Anschlagbund (19) zu schiebenden Zentrierabsatz (33) aufweist.

## Claims

1. A solar collector (2) for heating swimming pool water, which solar collector has two distributor pipes (3, 4), which are connected with one another by means of a multiplicity of parallel running ribbed pipes (5), and which solar collector is fixed on a roof surface (1) for example, and in the case of which solar collector a supply pipe (6) and/or outlet pipe (10) for the water is provided along a longitudinal side of the solar collector (2), wherein the supply pipe (6) and/or outlet pipe (10) is in each case constructed as a ribbed pipe (28), elastically displaceable in the longitudinal direction, and fixed to the solar collector (2), **characterized in that** pipe holders (11, 12, 13) serve to fix the supply pipe (6) and/or outlet pipe on the solar collector.

2. The solar collector (2) according to Claim 1, **characterized in that** the pipe holders (11, 12, 13) have a pipe seat (35), which snaps over the supply pipe (6) and/or outlet pipe, and a multiplicity of seats (36, 37) for gripping the ribbed pipes (5) arranged one behind the other with the spacing of the ribbed pipes (5) of the solar collector (2).

3. The solar collector according to Claim 1 or 2, **characterized in that** a pipe connector (7, 9) is provided for connecting the supply pipe (6) and/or outlet pipe of the solar collector (2), which pipe connector has a transition part (14) provided with an external thread (16), into which transition part the ribbed pipe (23), which forms the supply pipe (6) and/or outlet pipe (10), can be pushed from one side, and which pipe connector has a union nut (17) which can be screwed onto the external thread (16) and has a radially inwardly directed shoulder (18) at its end facing away from the transition part (14), which shoulder bears against a clamping ring (20) which clamps on the ribbed pipe which is pushed in, wherein the clamping ring (20) consists of at least two clamping ring sections (28, 29), a radially inwardly directed collar (21) of which clamping ring sections can in each case be inserted into a circumferential groove (22) of the ribbed pipe (23), the two clamping ring sections (28, 29) have a radially outwardly directed abutment collar (19) against which the shoulder (18) of the union nut (17) is able to bear, and a circumferential seal (24, 25) is inserted into at least one groove (26, 27) of the ribbed pipe (23) within the transition part (14).

4. The solar collector according to Claim 3, **characterized in that** each clamping ring section (28, 29) has a cylindrical region (32) which can be placed onto the outer curved surface of the ribbed pipe (23), which cylindrical region the union nut (17) is able to grip and **in that** the radially outwardly directed abutment collar (19) is provided close to an axial edge of the clamping ring section (28, 29).

5. The solar collector according to Claims 3 or 4, **characterized in that**, two clamping ring sections (28, 29) are provided overall, which together are able to enclose the ribbed pipe (23) over 360°.

6. The solar collector according to Claim 5, **characterized in that** the two clamping ring sections (28, 29) are connected to one another on one side by means of a film hinge (30).

7. The solar collector according to at least one of the preceding claims, **characterized in that** the inwardly directed shoulder (18) on the end face of the union nut (17) has a centring shoulder (33) which is to be pushed externally at least partially over the abutment collar (19).

## Revendications

1. Capteur solaire (2) pour réchauffer de l'eau de piscine, lequel présente deux tuyaux distributeurs (3, 4), qui sont reliés l'un à l'autre par une pluralité de tuyaux à nervures (5) passant en parallèle, et qui est fixé par exemple sur une surface de toit (1), et sur lequel il est prévu le long d'un côté longitudinal du capteur solaire (2) une arrivée (6) et/ou une évacuation (10) pour l'eau, l'arrivée (6) et/ou l'évacuation (10) étant réalisée(s) à chaque fois sous la forme de tuyau à nervures (28) déformable élastiquement dans le sens longitudinal et étant fixée(s) sur le capteur solaire (2), **caractérisé en ce que** des supports de conduite (11, 12, 13) servent à la fixation de l'arrivée (6) et/ou de l'évacuation.

2. Capteur solaire (2) selon la revendication 1, **caractérisé en ce que** les supports de conduite (11, 12, 13) présentent un logement de conduite (35) s'emboîtant par l'arrivée (6) et/ou l'évacuation et une pluralité de logements (36, 37) logés les uns derrière les autres à distance des tuyaux à nervures (5) du capteur solaire (2) pour le recouvrement des tuyaux à nervures (5).

3. Capteur solaire selon la revendication 1 ou 2, **caractérisé en ce que**, pour la liaison de l'arrivée (6) et/ou de l'évacuation du capteur solaire (2), il est prévu un raccord de tuyau (7, 9), qui présente une partie de transition (14) dotée de filetage extérieur (16), dans laquelle le tuyau à nervures (23), qui forme l'arrivée (6) et/ou l'évacuation (10), peut être introduit à partir d'un côté, lequel raccord présente un écrou-raccord (17) pouvant être vissé sur le filetage extérieur (16), qui comporte sur son extrémité, tournée vers la partie de transition (14), un épaulement (18) dirigé radialement vers l'intérieur et s'applique contre une bague de serrage (20) se bloquant sur le tuyau à nervures introduit, la bague de serrage (20) se composant d'au moins deux parties de bague de serrage (28, 29), lesquelles peuvent être insérées chacune avec une collerette (21) dirigée radialement vers l'intérieur dans une rainure (22) périphérique du tuyau à nervures (23), les deux parties de bague de serrage (28, 29) présentant une collerette de butée (19) dirigée radialement vers l'extérieur, contre laquelle l'épaulement (18) de l'écrou-raccord (17) peut s'appliquer, et un joint (24, 25) périphérique étant inséré dans au moins une rainure (26, 27) du tuyau à nervures (23) à l'intérieur de la partie de transition (14).

4. Capteur solaire selon la revendication 3, **caractérisé en ce que** chaque partie de bague de serrage (28, 29) présente une zone cylindrique (32) pouvant être posée sur la surface d'enveloppe extérieure du tuyau à nervures (23), zone par laquelle l'écrou-raccord (17) peut s'agripper et **en ce que** la collerette de butée (19) orientée radialement vers l'extérieur est prévue à proximité d'un bord axial de la partie de bague de serrage (28, 29).

5. Capteur solaire selon la revendication 3 ou 4, **caractérisé en ce qu'**au total deux parties de bague de serrage (28, 29) sont prévues, lesquelles peuvent entourer ensemble le tuyau à nervures (23) de 360°.

6. Capteur solaire selon la revendication 5, **caractérisé en ce que** les deux parties de bague de serrage (28, 29) sont reliées sur un côté par une charnière en film (30).

7. Capteur solaire selon au moins l'une quelconque des revendications précédentes, **caractérisé en ce que** l'écrou-raccord (17) présente sur sa face avant avec son épaulement (18) dirigé vers l'intérieur un décrochement de centrage (33) à faire glisser côté extérieur au moins en partie sur la collerette de butée (19).
